# EUROPEAN PATENT SPECIFICATION

(11) **EP 2 292 325 B1**
(45) Date of publication and mention of the grant of the patent: **11.03.2020**
(21) Application number: 10189384.0
(22) Date of filing: 04.06.2002
(51) Int. Cl.: B01J 3/04, B01J 8/20, C10G 1/00

(54) **PROCESS FOR COAL DEWATERING**
VERFAHREN ZUR ENTWÄSSERUNG VON KOHLE
PROCÉDÉ DE SECHAGE DE CHARBON

(30) Priority: 04.06.2001 AU PR544601
(43) Date of publication of application: 09.03.2011
(62) Divisional of application: 02729641.7
(73) Proprietor: Exergen Pty Ltd., Milton, QLD 4064 (AU)
(72) Inventor: Nicklin, Donald James, Closeburn, Queensland 4520 (AU); Tait, Peter James, Tarragindi, Queensland 4121 (AU)
(74) Representative: D Young & Co LLP

(56) References cited:
- EP-A- 0 282 276
- WO-A-79/00791
- DE-U1- 29 820 943
- US-A- 4 671 351
- US-A- 4 929 348
- US-A- 5 862 746

## Description

### FIELD OF THE INVENTION

This invention relates to reactors for chemical reactions. In particular the invention relates to reactors formed in bore holes thereby providing an environment in which high pressure may be generated and thermal efficiency may be maximised in comparatively safe conditions.

### BACKGROUND OF THE INVENTION

Many processes require slurries of material to be processed under elevated temperature conditions. Many of these processes involve at least one solid reagent which is slurried in a suitable fluid or solvent, often water, for processing.

Because it is generally desirable to limit the loss of the solvent by evaporation, the operations are carried out under a pressure such that the solvent will not evaporate.

Typical examples of such processes are the oxidative leaching of lateritic nickel ores, digestion of bauxite in Bayer Process plants, super-critical solvent extraction of coal, the hydro-liquefaction of coal and the hydro-thermal dewatering of brown coal.

These processes are commonly carried out in surface mounted pressure vessels. The pressure conditions encountered are typically up to 60 bar, but can be much higher for super-critical operations (eg + 220 bar for supercritical water). Temperatures for many processes are ideally carried out in the range 100 to 200°C, but sometimes desired operating temperatures can be 300°C or higher.

In many plants, the operating pressure of the high pressure operation is a trade off between the rapidly increasing capital and operating cost in going to higher pressure operations against the more desirable process results (eg better leaching kinetics, more rapid reaction, better extraction).

Some reaction vessels have such thick vessel walls to contain the pressure that they end up being made of clad material. For example, if titanium metal is required in contact with the process fluid, there will be a vessel wall thickness above which it is economic to switch from simply titanium plate across to steel clad in titanium. The use of either thick exotic materials or specialised construction techniques such as the use of clad plate, substantially add to the complexity and cost of such pressure vessels.

There is also an issue of safety. Having very high pressure vessels with aggressive process fluids leads to the prospect of vessel failure with serious personnel and property safety ramifications.

Generally, the surface mounted pressure vessel/s to perform these operations have high pressure feed pumps. For slurries, these can be quite complicated. For modest pressures, one or more centrifugal pumps can be used in series, but for very high pressures, special pumps are required and are extremely expensive. An additional deficiency then arises in that these very high pressure pumps, such as piston, diaphragm or plunger pumps, often limit the upper size of particles that may be handled.

It has been reported in US Patent No. 3,606,999 ("Lawless") that solid liquids and gases may be contacted at elevated pressures and desired temperatures by forming a reaction vessel at a depth suitable to use hydrostatic pressure in a delivery pipe. A single reaction vessel is described which, in one form, is a hydraulic equivalent of a U-tube mounted in a vertical passage. A method of transferring heat from outlet to inlet liquids is also described in which an inlet pipe is located in contact with an outlet stream. The arrangement of Lawless can only be used for a single reaction process at any one time, US-A-5862746 discloses a coal dewatering process.

### SUMMARY OF THE INVENTION

Unless the context clearly requires otherwise, throughout the description and the claims, the words "comprising", and the like are to be construed in an inclusive sense as opposed to an exclusive or exhaustive sense, that is to say, in the sense of "including, but not limited to".

The invention is a method according to claim 1 and a method according to claim 11. Embodiments of the invention are according to claims 2-10 and 12, 13. In a first broad aspect, the invention resides in a process arrangement for treating one or more materials, the arrangement comprising two or more vessels located beneath a surface of the ground to contain at least one of the one or more materials, the two or more vessels each including a reaction zone, entry means for feeding the at least one material to the reaction zone and exit means for retrieving material after it has been treated, wherein the vessels extend to a depth below the surface sufficient to generate a significant pressure from a hydrostatic head in the entry and/or exit means and at least two of the vessels are adapted for thermal exchange therebetween. Treating may include applying pressure and/or heat to the one or more materials.

The at least one material preferably comprises a different material or combination of materials for each of at least two vessels. The vessels may extend to any suitable distance below the ground surface but are preferably 100 metres or more below ground surface. The vessels may preferably extend 500 m or more below the ground surface. The at least one material may include coal.

The entry means may be formed as a continuous tube. The entry tube may be formed with at least part of its side walls formed by rock. The entry tube may be formed with at least part of its side walls formed by interconnected tubular sections, preferably metallic. Preferably the entry tube connects the reaction zone to the surface. Preferably the entry means is formed as a tube array comprising two or more continuous tubes. The two or more tubes may be parallel and may be connected to each other. In a preferred embodiment the tube array may comprise 100 or more tubes. The diameter of each tube may preferably be around 5 centimetres.

The exit means may be formed as a continuous exit tube. The exit tube may be formed with at least part of its side walls formed by rock. The exit tube may be formed with at least part of its side walls formed from metal, preferably as interconnected tubular sections. Preferably, the exit means connects the reaction zone to the surface. The exit means may comprise a tube array including two or more tubes. The two or more tubes may be parallel to each other. The tube array may comprise 100 or more tubes. The diameter of the tubes may be around 5 cm.

The entry means and exit means may be formed in at least one downwardly directed bore, preferably vertical. At least two vessels may be adapted for thermal exchange by location of at least part of the two vessels in heat exchanging proximity to each other. The vessels may share at least one common, heat transferring wall section which may be metallic. The heat transferring wall section may be located in the reaction zone of each of the at least two vessels but will typically occur associated with the regenerative heating step and may be outside the reaction zone.

Alternatively, the vessels may be adapted for heat transfer through a heat exchange means. The heat exchange means may comprise a liquid located in a circulation system, wherein the liquid is circulated from heat exchanging contact with a first vessel, to heat exchanging contact with a second vessel. The section of the respective vessels placed in contact may be any suitable sections such as reaction region and reaction region, entry tube and reaction region, or entry tube and exit tube.

The process arrangement may further comprise an access shaft adapted to provide access to at least one vessel. The process arrangement may comprise three or more reaction vessels. The 3 or more reaction vessels may be located around an access shaft formed to provide access to the vessels, especially at depth.

A reactor assembly comprises at least 2 reaction chambers each formed with an inlet means for delivering reaction materials to a reaction zone and outlet means for retrieving treated reaction materials from the reaction zone wherein the inlet means and outlet means are formed in downwardly extending subterranean passages and at least two of the reaction chambers are adapted for thermal exchange there between.

One or more of reaction chambers may be formed as an extended U-shaped configuration. At least two of the reaction chambers may share a common, heat transferring wall section. At least one of the reaction chambers may be located substantially within the confines of at least one other of the reaction chambers.

In a second aspect, the invention resides in a method of conducting two processes requiring pressurised conditions, the method comprising the steps of:
introducing materials for a first process into a first reactor located substantially underground and formed by a downwardly descending inlet tube arrangement, a process zone and an upwardly extending outlet tube arrangement;
introducing further materials for a second process into a second reactor located substantially underground and formed by a downwardly descending inlet tube, a process zone and an upwardly extending outlet tube arrangement;
initiating the first and second processes; and
transferring heat between the reactors.

The tube arrangement may include a single tube arrangement or a plurality of tubes, preferably arranged in parallel.

Initiating the first and second process may include the step of applying heat to at least one of the reactors. Preferably the first process is hydrothermal dewatering of coal, especially brown coal. The second process may suitably comprise coal liquefaction. In a preferred embodiment, coal which has undergone hydrothermal dewatering in a first reactor is subject to liquefaction in the second reactor.

A reaction vessel or reaction chamber includes one or more boreholes used to conduct at least a portion of a process underground. By this means, the fluid or slurry to be processed is pumped underground to a depth sufficient to generate a suitable pressure at which to conduct the desired process. The design of the borehole and underground facilities are such that preferably a major portion (>50%) of the pressure is generated by hydrostatic forces. It is a further option to provide for heat exchange between the fluid/s entering and leaving, between fluids and utility streams for either heating or cooling and with the ground material into which the borehole(s) are sunk. This heat exchange can be for the purposes of energy recovery, heating or cooling or to draw thermal energy from the surrounds.

In its simplest form, a vessel may include a single borehole with concentrically mounted pipes. An inner pipe might be used to convey the fluid down to the base of the borehole with the outer annulus used to convey the fluid back. Because a common wall separates the two fluids, heat exchange is obtained between the feed mixture being pressurised during its trip to the high pressure zone at the bottom of the bore and the fluid returning to the surface after being to the high pressure zone. This heat exchange can be used advantageously in most processes. In a preferred embodiment, the inner pipe arrangement comprises two or more pipes for delivery of material. The two or more pipes provide an increased surface contact area for the transfer of heat from exiting material to incoming material thereby producing increased efficiency in heat transfer. The two or more pipes may be connected to each other or alternatively stand alone. Sometimes, the process needs to be heated or cooled in the high pressure zone. This heat can be provided by many ways such as electrically, chemically, in indirect heat transfer with, for example, steam or direct heat transfer with steam or another fluid.

Chemical processes or reactions may be carried out in the high pressure zone. Additionally, other reactants may need to be added to the high pressure zone in order to achieve the desired reaction conditions. These reactants may include oxygen, hydrogen or the like. One variation is to inject gaseous reactants at a depth below the surface where sufficient pressure is established such that the bubble size of the gas once injected into the fluid, is sufficiently small that it can be swept down to greater depths by the velocity of the fluid. This saves having to compress the gas to the ultimate pressure required in the high pressure reaction zone and this helps save capital equipment for expensive gas compressor equipment.

In more complicated processing plants, a number of boreholes and underground caverns or pressure vessels may be used to perform complicated processing operations. The key feature in these processing plants is that gravity has been used for a substantial portion of the pressurising required. Furthermore, pressure recovery may also be achieved in returning material to the surface.

The physical means by which the underground processing facility is formed by a combination of drilling holes and for at least portions of the length, using the parent rock material as the "vessel". Other options including lining the hole with a thin walled pipe which is hydraulically deformed to occupy much of the original hole diameter by the forces of the fluid column, the installation of thick walled pipe in areas where the parent rock is not suitable, and the electro-deposition of metallic liners into the drilled rock. It is envisaged that the underground processing facility could consist of a number of interconnecting holes and pipes with expanded sections for vessels, heat exchanger sections and other functional geometries. It is also possible that the facilities are not only accessed from the surface. For example, it may be convenient to install the underground facilities adjacent to mining access tunnels or a central service bore to allow the provision of utilities, specialised equipment or instrumentation to selected portions of the processing equipment. At one extreme, the main pressure vessel that would have been used on the surface is placed underground and the piping from the surface down and back up is used largely to achieve the pressurisation and possibly the heat interchange. Thus, the underground environment assists to resolve pumping difficulties and potentially heat recovery issues. The preferred embodiment is for the processing apparatus to undertake at least a portion of the processing as this has capital cost advantages.

It is possible to add additional components to the feed fluid mixture to facilitate reaction. One example is to add a catalyst to assist in the desired reaction/s.

In still another aspect a method of physically and/or chemically altering a material comprises providing said material to a predetermined location underground at which a desired pressure and/or heat is applied, maintaining said material at said location for a period sufficient to physically and/or chemically alter said material, and retrieving said altered material from said location.

As will be known by those skilled in the art, the pressure and heat applied may not all come from the underground location. Some "artificial" boosting of the "natural" pressure and/or heat may be provided. For instance, the total pressure applied to the material can be a combination of the hydrostatic pressure applied by the column of material entering or leaving the vessel, the air/ground pressure at that location, and any additional "artificial" pressure boosting or relief.

In another aspect, a method of hydrothermal dewatering of coal in an underground reactor comprises one or more delivery tubes communicating with a reaction chamber which in turn communicates with one or more exit tubes, the method comprising the steps of:
delivering a coal slurry through the delivery tube or tubes to the reaction zone;
initiating the hydrothermal dewatering process;
wherein:
   the hydrothermal dewatering process occurs substantially in conditions of decreasing pressure as the material rises in the one or more exit tubes.

The coal is preferably brown coal. Substantially in this regard may mean at least 50% of the reaction occurring in conditions of decreasing pressure. The method may include the step of controlling the velocity of material at between 0.5 to 3.0 metres per second and preferably at around 1 metre per second. The method may include varying the concentration of coal in the slurry between 40% weight percentage coal as mined and 65% weight percentage of coal as mined. Preferably, the coal percentage is around 50% weight percentage.

### BRIEF DESCRIPTION OF THE DRAWINGS

Figure 1 is a schematic sectional view of an arrangement of a subterranean reactor.
Figure 2 is a schematic sectional view of two subterranean reactors arranged in co-operative working relationship.
Figure 3 is a schematic sectional view of two subterranean reactors and associated apparatus for treatment of coal.
Figure 4 is a schematic sectional view of two subterranean reactors and interconnected heat transfer system.
Figure 5 is a top view of an arrangement of subterranean reactors .

### DETAILED DESCRIPTION OF THE DRAWINGS

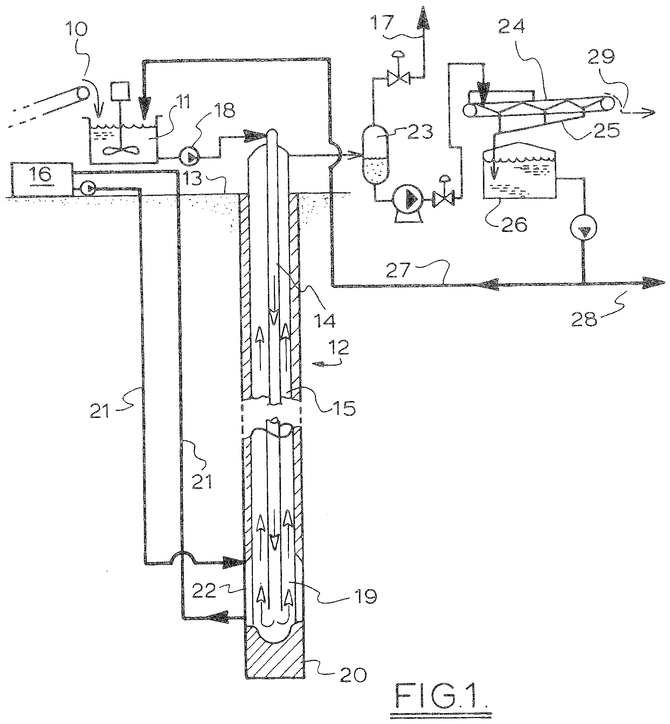

By way of clarification, an example of the technology, in which brown coal can be hydro-thermally dewatered in a reaction vessel or reaction chamber will now be discussed with reference to Figure 1. This process is based on the subject of expired Australian Patent Number 430626. This patent describes the characteristic of brown coal (and other organic materials) whereby upon application of pressure with temperature, the material characteristic of the coal changes. The coal is physically/chemically altered and water is expelled from the coal without the need for evaporation. The process described in the patent is not known to be widely commercialised which is considered largely due to the difficulty in performing this operation with surface mounted equipment - especially the feed pressurisation and product release mechanism.

Certain types of brown coal may contain up to 70% by weight of water. Brown coal may be understood to include sub-bituminous coal, lignite and unconsolidated brown coal. At high temperature and pressure and in the presence of water, coal loses a significant percentage of unbound water and undergoes changes that prevent complete reabsorption of water. This process may also generate CO₂. Heat treatment may be carried out at any suitable range but preferably above 200°C.

It is firstly desired to slurry brown coal delivered by conveyor 10 in water 11 which may be recycled process water and to pressurise and heat this to a temperature of around 250°C or higher to bring about an irreversible altering of the coal. In order to avoid vaporisation of water, the pressure should be kept above the vapour pressure of water at the selected temperature. At all locations along the reactor flow path, as temperature of the material increases, the pressure may also increase. In this case, the ultimate pressure reached would be at least 40 bar for 250°C and correspondingly higher for higher temperatures. The referenced patent describes a mechanically and operationally complicated system with poor heat recovery comprising a pressurising screw extruder, a high pressure autoclave and a discharge device also consisting of a screw. The system is considered a compromise between the cost of the equipment (and the safety considerations) and the desire to operate at higher temperature (and hence pressure) in order to speed the kinetics of reaction.

When the same reaction is conducted according to the present invention, it is safe and convenient to operate to a higher temperature. For the purposes of this example, a temperature of 280°C has been chosen. The hydro-thermal dewatering is known to proceed very rapidly under these conditions. To prevent water evaporating, the pressure should be at least 65 bar when the temperature is near 250°C. This is achieved by conducting the process according to the present invention in a piping arrangement forming a reactor or reaction vessel 12 that extends at least 650 m down beneath the ground surface 13. Note that some flexibility exists to shorten the submerged length by providing back-pressure and/or elevated discharge piping at the surface.

By the time frictional pressure drops and the increased density of a coal/water slurry are taken into account, the fluid is at all times above its saturation pressure for the entire path from surface slurrying facilities, through the centrifugal feed pump, through the underground reactor, back to the surface and through the product discharge arrangement.

The pipes to conduct the process consist of two relatively thin walled pipes mounted concentrically. The slurry mixture flows down to the bottom of the borehole via the inner pipe 14 and back via the annulus 15. Heating is provided to initiate the reaction and to maintain the operating conditions if required. This can be via an electric heater near the base of the process or by any other means (eg a separate hot oil or liquid metal circuit 16). Note that brown coal thermal dewatering is unusual in that the reaction that takes place is slightly exothermic with the release of some carbon dioxide 17. If properly designed, it should be possible to have the reaction self-supporting by achieving most (if not all) of the thermal heat requirements by the heat released from the process. A plurality of smaller diameter inner pipes can be used to increase the surface area for heat transfer and external heat transfer equipment can also be provided if required.

The slurry is delivered to the inner pipe 14 by pump 18. As the slurry descends down pipe 14, heat transfer occurs through the wall of pipe 14, which may be any suitable conducting material with adequate strength characteristics. Preferably the wall is metal. The slurry descends with increasing pressure to a reaction zone 19 where adequate temperature and pressure are attained for the desired process. The reaction zone 19 and the reaction vessel 12 may be supported by concrete reinforcement 20 although this is not essential. The reaction zone may include sections of the inner pipe and/or the annulus 15 as initiating conditions may be attained during the descent of the material and acquiring heat. The reaction may also continue through the lowermost section of the reaction zone and at least part way up the exit means in the form of the annulus 15.

Heat is effectively supplemented by hot oil delivered from heating system 16, through pipes 21 to heat exchanger 22. The treated material then flows up the annulus 15, allowing for heat transfer back into the delivered material in the pipe 14.

Treated material is delivered to a separator 23 which facilitates discharge of carbon dioxide 17. The treated slurry is delivered to a conveyor 24 which is formed to allow drainage of excess water onto collecting surface 25 and subsequent containment in tank 26. Some water is recycled through line 27 and excess water is forwarded for treatment 28 prior to discharge. Processed coal 29 is transported as required.

The above process may be particularly beneficial as, with selection of suitable conditions, it will produce high quality, low porosity material from brown coal. A preferred temperature is in the range of 250-350°C, most preferred around 320°C. Treatment time at this level may be 5 minutes or more. In certain conditions the treatment time may be even less. Preferably the reactor is configured so that most of the heating over 250°C is in a zone of decreasing pressure. Most commonly, this will occur in the exit tube where decreasing pressure is a product of the elevation of the material in the reactor. Controlling the reaction location such that coal particles that traverse the reaction zone do so in conditions of decreasing static pressure may result in a denser, drier product with decreased intraparticle porosity. A preferred velocity for the material is around 1 metre per second in downward and upward flow. One benefit of this velocity is that frictional pressure drop is relatively easily met by conventional centrifuge pumps, although a number connected in series may be advantageously used. A preferred range for the velocity is 0.5 to 3 metres per second. A further control aspect of the process arises from the capacity to vary the concentration of coal in the slurry. By decreasing the concentration, the temperature rise in the slurry may be decreased. This provides a means of manipulating the thermal conditions in the reaction zone. The high cost and high energy input of surface systems are avoided with the present system providing the ability to generally operate at a steady, controlled, cost and energy effective manner.

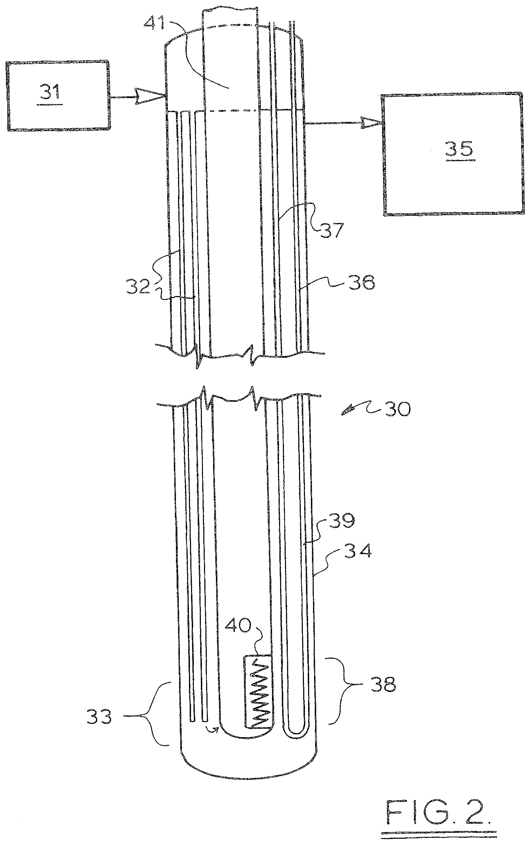

Figure 2 shows a schematic representation of two combined reactors indicated generally as 30. Coal slurry 31 is delivered to an inlet means in the form of inlet tubes 32 and descends under the effect of gravity and pumping towards reaction zone 33. While this schematic representation discloses two inlet tubes it should be appreciated that effective heat transfer may best arise from an array of tubes of up to 100 to 200 in number, or any other suitable number. The number of tubes will vary with the amount of heat required and can be calculated using heat exchange equations as needed. If, for example, larger diameter tubes are used, the inlet tube may be taken deeper to provide an increased opportunity for heat transfer. An operator may choose to add the effect of a pump to the pressure delivery column in tubes 32 to enhance the pressure effect of the inlet supply. The decarboxylation reaction that occurs during hydrothermal dewatering is exothermic and provides the capacity to produce at least some and potentially all of the temperature lift required in the base of the reactor. It may be necessary to provide start-up heat and boost heat generation during operation. The use of appropriate heat supply devices or systems is well known to a person skilled in the area. Treated coal slurry then rises in the outlet means in the form of outlet tube or chamber 34 resulting in a discharge of hydrothermally dewatered coal slurry 35 which may be further treated for recovery. The outer tube 34 may be formed with a cross sectional shape of two spaced concentric circles, the inner most located around a central utility access bore 41.

A second reaction chamber or vessel 36 is formed by a second inlet tube 37, second reaction zone 38 and second outlet tube 39.

The second reaction chamber is located to provide suitable heat transfer between the contents of the reaction zone 38 of the first reaction vessel or reactor and the contents of the second reaction vessel or reactor. Clearly heat transfer may also occur during the passage of material down second inlet tube 37. An auxiliary heat source 40 may also be provided to supply heat to the first reaction chamber and/or to the second reaction chamber. In a preferred process, the second reaction chamber 36 is used for hydroliquefaction of coal. This process produces substances such as gasoline and light oil from coal as a result of decomposing coal preferably under high-pressure hydrogen and in moderate temperatures (which may be around 350°C to 470°C) thereby producing oil which is a mixture of low molecular weight aromatic and aliphatic hydrocarbons. The liquefaction reactivity of coal is highly dependent on the type of coal. The yield of oil and other products vary with coal composition.

In the present arrangement the exothermic reaction of hydrothermal dewatering of coal produces heat which may be insufficient to totally power the process. Heat may therefore be harnessed from the exothermic coal liquefaction process providing a substantially closed, self sustaining system and simultaneous conduct of two independent processes. Combination of hydrothermal dewatering of coal and coal liquefaction therefor produces an efficient, co-operative interaction of the two working reactors to provide a beneficial outcome. The use of the cooperating deep reactors enables generation of high pressures safely as well as thermally efficient use of heat. The long flow paths provide for a reactor system which is largely plug flow.

The arrangement of figure 2 also discloses a central utilities access bore 41 which facilitates construction and maintenance of the reactors. Such an arrangement may facilitate supply of utilities and monitoring equipment access.

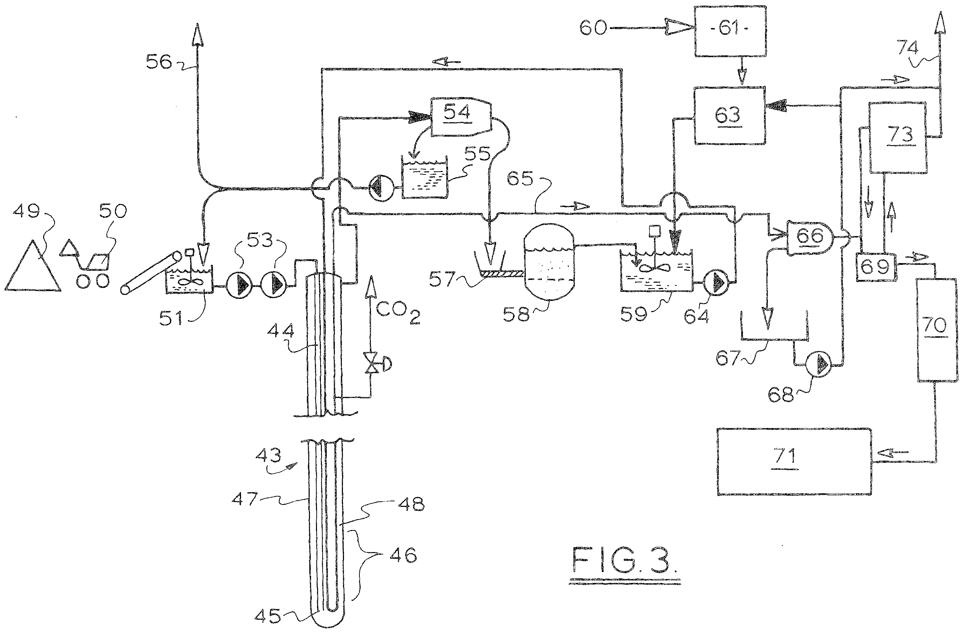

Figure 3 is a schematic representation of an alternative arrangement of co-operating reactors in which a first reactor 43 is formed with a relatively narrow inlet tube 44 discharging through lowermost aperture 45 into reaction zone 46. The introduced material flows through the reaction zone 46 before rising up outlet annulus or chamber 47.

The second reactor may of course be any suitable shape and indeed, several reactors may be located within the confines of the first reactor.

In operation, coal is collected from a stockpile 49 by any suitable mechanical device 50 and transferred to a tank 51 to mix with water to form a slurry. Pumps 53 transfer the slurry to the inlet tube 44 to travel through the first reactor. The treated material in the form of hydrothermally dewatered coal slurry is discharged from the reactor and transferred to a centrifuge 54 which separates the treated coal from water. Excess water is collected in the waste tank 55 and recycled to tank 51 and/or to waste 56.

Treated coal from the centrifuge 54 is delivered to a conveyor 57 to feed to a fluid bed drier 58. The dried coal may then be used for any suitable purpose.

In the present system, the dry coal is moved to a receiving tank 59 where it is prepared for hydroliquefaction processing. Natural gas 60 may be delivered to a hydrogen plant 61 to produce hydrogen gas which is used in a hydrogenation reactor 63 to hydrogenate a portion of the product oil to make it suitable for use as a hydrogen donor solvent. The hydrogen donor solvent is transferred to the receiving tank 59 for mixing with treated coal to form a slurry. A pump 64 transfers the slurry to the second reactor 48 where the mixture undergoes further pressurisation, preheating and liquefaction during passage through the reactor. The treated coal from the second reactor is transferred by line 65 to a second centrifuge 66 which separates liquid and solid components. The excess oil is separated and collected in an additional tank 67 before delivery by pump 68 to recycle and product oil 74. The solids from centrifuge 66 are washed with a suitable solvent in a washing stage 69. The washed solids are dried 70 and forwarded as combustible char to, for example, a power station 71.

Wash liquids are delivered to a separation unit 73 where the oil 74 is separated (eg. by distillation) and stored for use and recycled solvent is returned to the wash stage 69. This system provides a good example of a dual process reactor arrangement that provides important products of considerable value in a cost effective, thermally efficient and safe manner.

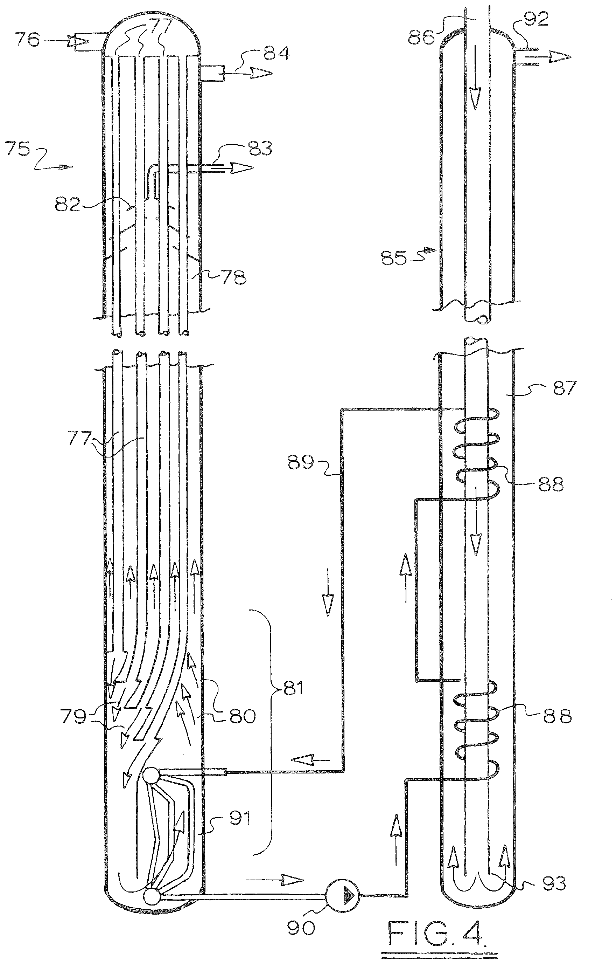

Figure 4 is a schematic representation of two reactors in thermal exchange communication through heat transfer means. Again, reference will be made to the twin processes of hydrothermal dewatering and hydroliquefaction of coal. There is however no intention to limit the application of co-operating reactors to these applications.

A coal slurry is delivered to an inlet port 76 of a first reactor 75 and then into a plurality of descending inlet tubes 77 so chosen to provide the desired quantity of regenerative heat exchange while ensuring that, at all locations, the prevailing pressure exceeds the vapour pressure of the fluid. The slurry descends as a column down the tubes 77 providing hydrostatic pressure in the process and being heated through heat transferring walls, such as metal, from the ascending treated material in the outlet tube 78 which encloses the inlet tubes 77. The tubes may of course be any suitable shape to facilitate variations in rock and soil profiles. In one embodiment, the outer wall of one or more reactors may be formed by impervious rock, or treated sealed rock. Downwards arrows 79 show outfall of the material to be treated. Upward arrows 80 generally show the flow of treated material as it transits the reaction zone 81. The reaction zone is not a specifically defined region and is a term used to generally denote a zone in which initiating conditions of temperature are attained. It may include sections of the inlet and outlet tubes. The pressure increase is provided to ensure the vapour pressure of water is always exceeded to thereby prevent vaporisation. The actual pressure may exceed the vapour pressure by a factor of many times. These pressures may be attained by simply increasing the depth of the reactor and hence the hydrostatic head.

For processes that produce gas, one or more collectors 82 may be located in the outlet tube 78 to gather gas and direct it through a discharge line 83. Collectors may be located at a series of different depths in the reactor. In the present reaction, carbon dioxide may be formed and sequestered. It is preferred to have a series of collectors sited at various locations to facilitate the removal of gas thereby avoiding a bubbling effect as the surrounding pressure around highly pressurised gas bubbles decreases. As well as a safety aspect, this also provides for the sequestration of highly pure carbon dioxide which may be put to other industrial and commercial purposes. It may also be preferably to add one or more choking valves to the outlet means. This valve or valves may be used to control pressure in the outlet tube and hence, control pressure in the inlet tube. A pressure monitoring system may be provided in the outlet and inlet means. If gas production in the reaction zone decreases density of the material in the outlet means, a decrease in hydrostatic pressure in the inlet means may result and may produce an increased velocity as the denser inlet material produces a greater net flow pressure. If a pre-set limit of pressure in the inlet means is reached, the choking valve or valves may be activated to impact on the discharge velocity thereby maintaining the pressure in the system within preferred limits. This provides another mechanism for control of the process occurring in the system.

Treated material is discharged through outlet port 84. A second reactor 85 is shown having an inlet tube 86 located internally in an outer annulus forming the outlet tube 87.

Dry coal is slurried in a hydrogen donor fluid and delivered to the inlet tube 86. Hydroliquefaction is an exothermic reaction and heat produced may be harnessed and transferred by a heat transfer device. In Figure 4, a first heat exchange arrangement 88 is located in the second reactor and sited at a suitable location.

Heat is transferred to a suitable fluid such as liquid sodium or heat transfer oil which is circulated around a circuit by a pump 90. The heat containing fluid is fed through a heat dispensing exchanger 91 to supplement heat generated in the reaction zone 81.

While the hydrothermal dewatering process is in itself exothermic, the energy requirements of a significant processing rate may not be adequately met by reliance on inherent heat generation. The harnessing of excess heat from another exothermic process may be of great benefit in maintaining the processing assembly in effective and productive operation.

Liquefied coal products are discharged from the outlet 92 of the second reactor 85 after discharge from the inlet tube 86 through lower opening 93 and flow up the annulus 87. Heat transfer between incoming and outgoing material may also be of considerable benefit. The desired heat exchange area may be achieved by using a multiplicity of tubes in parallel.

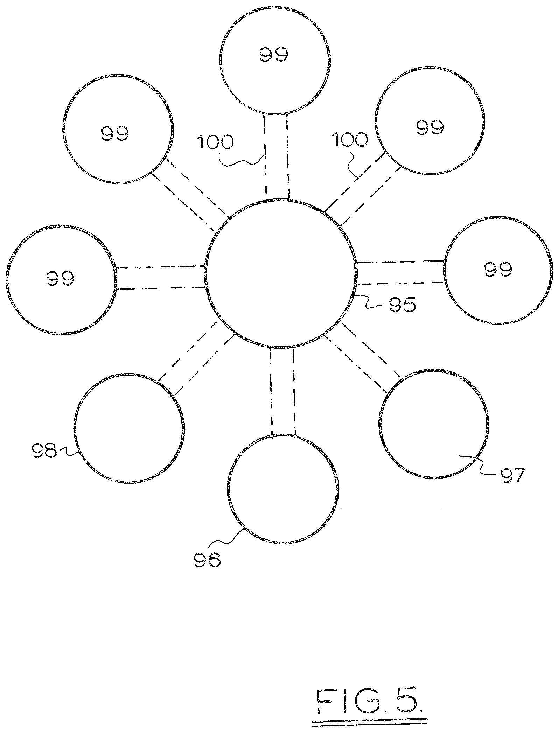

Figure 5 is a top, schematic view of a group of reactors disposed around a central access shaft 95. Individual reactors are arranged as required. A reactor 96 is dedicated to hydroliquefaction of coal. Excess heat is conducted to a reactor 97 dedicated to hydrothermal dewatering by a heat transfer mechanism (not shown). A combined reactor 98 is also provided with a first and second reactor located in operating engagement. Further reactors 99 of the same or different arrangement are distributed around central shaft 95. Access through lateral shafts 100 (in hidden detail) which are formed at any convenient depth below the surface provide communication with the central access shaft 95.

One of the great advantages of the present invention is that physically mismatched reactors may be placed in working relationship with each other. That is, a deep, high pressure reactor may be placed in co-operative operation with a shallower, lower pressure device wherein the transfer of heat between the two may optimise the efficiency of the dual processes.

Although not shown, it is also possible to assemble a complex processing arrangement wherein sequential steps in a process are performed in interconnected reactors. Lateral communicating channels may be provided between an outlet tube of one reactor and an inlet tube of the next sequentially connected reactor. Such a communicating channel may be formed at a depth to retain materials at a required or preferred pressure. For example, hydrogen formed at pressure may be conveniently provided to another reactor rather than transporting it to the surface and attempting to repressurise or maintain its pressure for subsequent use. Adjacent reactors may be connected by a series of communication channels provided at different depths with a control system for selecting one or more desired channels during operation.

The reactor system shown in Figure 5 provides an intensive processing plant for the conduct of high pressure reactions in safety. Additionally, interactivity of reactors provides an ongoing thermal efficiency. Clearly, more than two reactors may be provided in co-operating operation.

Other examples (by no means an exhaustive list) of processes that can use the present invention are:
US Patent 5,312,462 Moist Caustic Leaching of Coal. Coal is slurried in a mixture of NaOH and KOH and heated under pressure to cause a reduction in the levels of ash and sulfur.

US 5,214,015. Synthesis of Iron Based Hydrocracking Catalyst. Iron oxide and sulfur are reacted with a liquid hydrogen donor in the range 180 to 240°C.

US 5,369,214 Method of Selective Dehalogenation of Halogenated Polyaromatic Compounds. Halogenated polaromatic compounds are mixed with a hydrogen donor solvent and a carbon catalyst and pressurised and heated leading to the dehalogenation of the compounds.

US 4,695,372 Conditioning of Carbonaceous Material Prior to Physical Beneficiation. Coal is conditioned by contact with a supercritical fluid (ie typically high temperature and pressure). A minor solute fraction is extracted leading to enhanced beneficiation.

Other examples exist in the fields of achieving phase transformations in solids, leaching, extraction, reaction, polymerisation, liquefaction, oxidation, reduction, processes involving hydrogen donor solvent reactions, dissolution, precipitation.

In some cases, the parent rock material will be suitable to have in contact with the process fluid.

Clearly a very high number of candidate processes can be carried out in the subject system and there are a wide number of variations in the way the underground processing system is assembled and used.

## Claims

1. A method of hydrothermal dewatering of coal in an underground reaction chamber comprising entry means having two or more delivery tubes communicating with a reaction zone which in turn communicates with exit means comprising one or more exit tubes, the method comprising the steps of:
delivering a coal slurry through the two or more delivery tubes to the reaction zone at a depth sufficient to generate pressure from a hydrostatic head; and
initiating the hydrothermal dewatering process such that the process occurs substantially in conditions of decreasing pressure as material rises in the one or more exit tubes.

2. The method of claim 1, further including the step of:
maintaining an upward directed flow of the material substantially throughout hydrothermal dewatering of the coal.

3. The method of claim 2, wherein the velocity of the material is controlled by pump pressure.

4. The method of claim 2, wherein the upward directed flow of the material is maintained throughout hydrothermal dewatering of at least 50% of the coal.

5. The method of claim 1, wherein a velocity of the coal slurry is in the range of 0.5 metre per second to 3 metres per second.

6. The method of claim 5, wherein the velocity is about 1 metre per second.

7. The method of claim 1, wherein the concentration of coal in the slurry is selected to control the heat production of the reaction and thereby control the temperature in the reaction zone.

8. The method of claim 7, wherein the concentration of as mined coal in the slurry is between 40 wt% and 65 wt%.

9. The method of claim 8, wherein the concentration of coal in the slurry is about 50 wt%.

10. The method of any one of claims 1 to 9, wherein the coal is brown coal.

11. A method of conducting two processes under pressurised conditions, comprising the steps of:
introducing material for a first process into a first reaction chamber located underground and formed by a downwardly extending entry means communicating with a reaction zone, said reaction zone communicating with an upwardly extending exit means;
introducing further material for a second process into a second reaction chamber located underground and formed by a downwardly extending entry means communicating with a reaction zone, said reaction zone communicating with an upwardly extending exit means;
initiating the first and second processes; and
transferring heat between the reaction chambers,
wherein one of the processes is a method of hydrothermal dewatering of coal according to claim 1 and the first and second reaction chambers each extend underground to a depth sufficient to generate pressure from a hydrostatic head.

12. The method of claim 11, wherein the other of the processes is coal liquefaction.

13. The method of claim 12, wherein coal which has undergone hydrothermal dewatering in said one of the processes is subject to liquefaction in said other of the processes.

## Patentansprüche

1. Verfahren zum hydrothermalen Entwässern von Kohle in einer unterirdischen Reaktionskammer, die Eintrittsmittel mit zwei oder mehr Abgaberohren umfasst, die mit einer Reaktionszone kommunizieren, die wiederum mit Austrittsmitteln kommuniziert, die ein oder mehrere Austrittsrohre umfassen, wobei das Verfahren die Schritte umfasst:
Abgeben einer Kohleaufschlämmung durch die zwei oder mehr Abgaberohre an die Reaktionszone in einer ausreichenden Tiefe, um durch eine hydrostatische Druckhöhe Druck zu generieren; und
Initiieren des hydrothermalen Entwässerungsprozesses derart, dass der Prozess im Wesentlichen unter Bedingungen des abnehmenden Drucks stattfindet, wenn Material in dem einen oder den mehreren Austrittsrohren aufwärts steigt.

2. Verfahren nach Anspruch 1, des Weiteren einschließend den Schritt:
Aufrechterhalten eines aufwärts gerichteten Flusses des Materials im Wesentlichen mittels hydrothermaler Entwässerung der Kohle.

3. Verfahren nach Anspruch 2, wobei die Geschwindigkeit des Materials durch Pumpendruck gesteuert wird.

4. Verfahren nach Anspruch 2, wobei der aufwärts gerichtete Fluss des Materials mittels hydrothermaler Entwässerung von mindestens 50 % der Kohle aufrechterhalten wird.

5. Verfahren nach Anspruch 1, wobei eine Geschwindigkeit der Kohleaufschlämmung im Bereich von 0,5 Metern pro Sekunde bis 3 Metern pro Sekunde liegt.

6. Verfahren nach Anspruch 5, wobei die Geschwindigkeit etwa 1 Meter pro Sekunde beträgt.

7. Verfahren nach Anspruch 1, wobei die Konzentration der Kohle in der Aufschlämmung ausgewählt wird, um die Wärmeproduktion der Reaktion zu steuern und dadurch die Temperatur in der Reaktionszone zu steuern.

8. Verfahren nach Anspruch 7, wobei die Konzentration der Kohle wie gefördert in der Aufschlämmung zwischen 40 Gew.% und 65 Gew.% liegt.

9. Verfahren nach Anspruch 8, wobei die Konzentration der Kohle in der Aufschlämmung etwa 50 Gew.% beträgt.

10. Verfahren nach einem der Ansprüche 1 bis 9, wobei die Kohle Braunkohle ist.

11. Verfahren zum Durchführen von zwei Prozessen unter druckbeaufschlagten Bedingungen, umfassend die Schritte:
Einbringen von Material für einen ersten Prozess in eine erste Reaktionskammer, die sich unter der Erde befindet und durch ein sich abwärts erstreckendes Eintrittsmittel gebildet ist, welches mit einer Reaktionszone kommuniziert, wobei die Reaktionszone mit einem sich aufwärts erstreckenden Austrittsmittel kommuniziert;
Einbringen von weiterem Material für einen zweiten Prozess in eine zweite Reaktionskammer, die sich unter der Erde befindet und durch ein sich abwärts erstreckendes Eintrittsmittel gebildet ist, welches mit einer Reaktionszone kommuniziert, wobei die Reaktionszone mit einem sich aufwärts erstreckenden Austrittsmittel kommuniziert;
Initiieren des ersten und des zweiten Prozesses; und
Übertragen von Wärme zwischen den Reaktionskammern, wobei einer der Prozesse ein Verfahren zum hydrothermalen Entwässern von Kohle gemäß Anspruch 1 ist, und die erste und die zweite Reaktionskammer sich jeweils unterirdisch bis in eine ausreichende Tiefe erstrecken, um Druck aus einer hydrostatischen Druckhöhe zu generieren.

12. Verfahren nach Anspruch 11, wobei der andere der Prozesse Kohleverflüssigung ist.

13. Verfahren nach Anspruch 12, wobei Kohle, die hydrothermale Entwässerung in einem der Prozesse durchlaufen hat, in dem anderen der Prozesse Verflüssigung unterzogen wird.

## Revendications

1. Procédé de déshydratation hydrothermique de charbon dans une chambre de réaction souterraine comprenant des moyens d'entrée ayant deux ou plus de deux tubes de distribution communiquant avec une zone de réaction qui à son tour communique avec des moyens de sortie comprenant un ou plusieurs tubes de sortie, le procédé comprenant les étapes de :
distribution d'une boue de charbon à travers les deux ou plus de deux tubes de distribution à la zone de réaction à une profondeur suffisante pour générer une pression à partir d'une charge hydrostatique ; et
lancement du processus de déshydratation hydrothermique de telle sorte que le processus se déroule essentiellement dans des conditions de pression décroissante à mesure que la matière monte dans le ou les tubes de sortie.

2. Procédé selon la revendication 1, comprenant en outre l'étape de :
maintien d'un écoulement orienté vers le haut du matériau sensiblement pendant toute la durée de la déshydratation hydrothermique du charbon.

3. Procédé selon la revendication 2, la vitesse du matériau étant commandée par la pression de la pompe.

4. Procédé selon la revendication 2, l'écoulement orienté vers le haut du matériau étant maintenu pendant toute la durée de la déshydratation hydrothermique d'au moins 50 % du charbon.

5. Procédé selon la revendication 1, une vitesse de la boue de charbon étant comprise dans la plage de 0,5 mètre par seconde à 3 mètres par seconde.

6. Procédé selon la revendication 5, la vitesse étant d'environ 1 mètre par seconde.

7. Procédé selon la revendication 1, la concentration de charbon dans la boue étant sélectionnée pour commander la production de chaleur de la réaction et ainsi commander la température dans la zone de réaction.

8. Procédé selon la revendication 7, la concentration de charbon extrait dans la boue étant comprise entre 40 % en poids et 65 % en poids.

9. Procédé selon la revendication 8, la concentration de charbon dans la boue étant d'environ 50 % en poids.

10. Procédé selon l'une quelconque des revendications 1 à 9, le charbon étant du lignite.

11. Procédé pour réaliser deux processus dans des conditions de pression, comprenant les étapes de :
introduction d'un matériau pour un premier processus dans une première chambre de réaction située sous terre et formée par des moyens d'entrée s'étendant vers le bas communiquant avec une zone de réaction, ladite zone de réaction communiquant avec des moyens de sortie s'étendant vers le haut ;
introduction d'un autre matériau pour un second processus dans une seconde chambre de réaction située sous terre et formée par des moyens d'entrée s'étendant vers le bas et communiquant avec une zone de réaction, ladite zone de réaction communiquant avec des moyens de sortie s'étendant vers le haut ;
lancement des premier et second processus ; et
transfert de la chaleur entre les chambres de réaction,
un processus parmi les processus étant un procédé de déshydratation hydrothermique de charbon selon la revendication 1, et les première et seconde chambres de réaction s'étendant chacune sous terre à une profondeur suffisante pour générer une pression à partir d'une charge hydrostatique.

12. Procédé selon la revendication 11, l'autre processus parmi les processus étant la liquéfaction du charbon.

13. Procédé selon la revendication 12, le charbon qui a subi une déshydratation hydrothermique dans ledit un processus parmi les processus étant soumis à une liquéfaction dans ledit autre processus parmi les processus.
